# EUROPÄISCHE PATENTSCHRIFT

(11) **EP 1 338 829 B1**
(45) Veröffentlichungstag und Bekanntmachung des Hinweises auf die Patenterteilung: **20.10.2004**
(21) Anmeldenummer: 03100452.6
(22) Anmeldetag: 25.02.2003
(51) Int. Cl.: F16H 25/24

(54) **Umsetzanordnung mit Spindeltrieb**
Transfer device with spindle drive
Dispositif de transfert à transmission vis-écrou

(30) Priorität: 26.02.2002 DE 10208030
(43) Veröffentlichungstag der Anmeldung: 27.08.2003
(73) Patentinhaber: BAUMÜLLER NÜRNBERG GMBH, D-90482 Nürnberg (DE)
(72) Erfinder: Meister, Rudolf, 90596, Schwanstetten (DE)
(74) Vertreter: Götz, Georg, Dipl.-Ing.

(56) Entgegenhaltungen:
- EP-A- 1 089 019
- WO-A-02/35119
- DE-A- 19 711 773

## Beschreibung

Die Erfindung betrifft eine Anordnung zum Umsetzen rotatorischer Motorbewegungen in lineare und/oder translatorische Stellbewegungen mit einem Spindeltrieb. Bei diesem steht eine durch die Motorbewegung drehbare Spindelmutter über Getriebemittel mit einer Spindel in Eingriff, die zur Ausführung der Stellbewegungen in einer Hohlwelle oder einem sonstigen Hohlkörper (beispielsweise Führungsbuchse) gegen Rotation blockiert und axial unter radialer Abstützung an der Hohlwellen-Innenwandung durch ein Stützlager geführt ist, das einen oder mehrere Wälzkörper aufweist.

Aus der Offenlegungsschrift DE 28 09 954 ist ein Getriebe zum Umwandeln einer drehenden in eine hin- und hergehende Bewegung und umgekehrt bekannt. Letztere, translatorische Bewegung wird dabei von einem Kurvenkörper ausgeführt, der in einem rohrförmigen Teil geführt ist. Als Führungsmittel ist ein mit der Innenseite des rohrförmigen Teils zusammenwirkendes Gleitlager vorgesehen, das am Kurvenkörper im Bereich außerhalb der Leitkurve angeordnet ist. In der Zeichnung ist dieses Gleitlager durch eine den Kurvenkörper bzw. die Spindel umgebende Hülse dargestellt.

Zur Entlastung der Spindel und der Spindelmutter ist auch bei einem Linearstellglied gemäß der gattungsgemäßen Vorveröflentlichung EP-A-1 089 019 ein Stützlager mit Gleitlagerhülse vorgesehen. Davon umgeben sind die Innen- und Außenringe zweier radialer Kugellager, welche auf einem vom Spindelende vorspringenden Spindelzapfen aufgesteckt sind. Dadurch soll eine gleichsam in radialer Richtung spielfreie Lagerung der Spindel in einem Hohlwellenrotor erreicht werden. Die auf die Spindel übertragenen Querkräfte sollen dadurch reduziert und die Lebensdauer des entsprechenden Gewindetriebes erhöht werden.

Demgegenüber ergibt sich jedoch die der Erfindung zugrundeliegende Aufgabe, bei einer gattungsgemäßen Umsetzanordnung mit Spindeltrieb die Abstützung der Spindel in ihrer translatorischen Führung insbesondere gegenüber radialen Querkräften in Bauteileaufwand und Konstruktionsstruktur zu vermindern beziehungsweise zu vereinfachen. Gleichzeitig soll die Betriebszuverlässigkeit der radialen Spindel-Abstützung und axialen Spindelführung erhöht werden.

Zur Lösung dieser Aufgabe wird bei einer Umsetz-Anordnung mit den eingangs genannten Merkmalen erfindungsgemäß vorgeschlagen, dass der oder die Wälzkörper zum Abrollen direkt wenigstens auf der Innenwandung der Hohlwelle oder des sonstigen Hohlkörpers und/oder einer Außenumfangswandung der Spindel angeordnet und geführt sind. Weitere vorteilhafte Ausgestaltungen und optionale Erfindungsmerkmale ergeben sich aus den abhängigen Ansprüchen.

Indem erfindungsgemäß ein oder mehrere Wälzkörper zwischen Spindel und Hohlwelle direkt wenigstens auf der Innenwandung der Hohlwelle oder alternativ oder zusätzlich auf der Spindel-Außenwandung abrollen, können nach dem Stand der Technik notwendige Bauteile wie Gleitlagerhülse und Kugellager vollständig mit Innen- und Außenring oder dergleichen entfallen. Der Aufwand an Bauteilen und Konstruktion vereinfacht sich somit erheblich. Ferner trägt die verminderte Anzahl notwendiger Bauteile zur Erhöhung der Betriebszuverlässigkeit bei.

Gemäß einer besonderen Erfindungsausbildung sind bei der Spindel ein separater, getriebemittelloser oder sonstwie abgegrenzter Abschnitt oder Endfortsatz ausgebildet, die zum Abrollen des oder der Wälzkörper vorzugsweise mit Laufrillen oder sonstigen Laufbahnen zum Abrollen und/oder Führen des oder der Wälzkörper versehen sind. Alternativ können solche Führungsmittel auch an der Innenwandung der Hohlwelle ausgebildet sein. Wichtig ist dabei, dass ein Rollen des Wälzkörpers um die Spindel-Mittelachse gewährleistet ist. In konkreter Ausgestaltung läßt sich dies beispielsweise mit einer in die Wandung vertieften Laufrille oder einer sonstigen Laufbahn zum Abrollen und/oder Führen des oder der Wälzkörper bewerkstelligen, die am genannten Abschnitt oder Endfortsatz der Spindel oder auf der gegenüberliegenden Hohlwellen-Innenwandung ausgebildet sind.

Gemäß einer besonders vorteilhaften Ausgestaltung ergibt sich eine erfindungsgemäße Herstellungsmethodik für die Umsetz-Anordnung wie folgt: Auf den für die Wälzkörper vorgesehenen Abschnitt oder Endfortsatz der Spindel wird ein Wälzlager mit Innenring, einer Mehrzahl von Wälzkörpern und gegebenenfalls einem die Wälzkörper führenden Käfig aufgesteckt; der Außenring wird dabei bewußt weggelassen und durch die Bohrung der Hohlwelle ersetzt.

Es liegt also im Rahmen der Erfindung, dass für den oder die Wälzkörper die Hohlwelle in der Funktion eines Wälzlager-Außenrings und/oder die Spindel in der Funktion eines Wälzlager-Innenrings verwendet oder eingesetzt werden. Dabei eignen sich besonders gut Rollen oder Nadeln in Zylindergestalt (sogenannte Zylinder- oder Nadelrollen) oder Kugeln als Wälzkörper.

Im Falle von zylindrischen Wälzkörpern (Rollen oder Nadeln) ist es zweckmäßig, die oben genannte, in die jeweilige Wandung der Hohlwelle oder des Spindelumfangs vertiefte Laufbahn mit beidseitigen Anschlagschultern (sogenannte "Borde" - bei marktgängigen Rollenlagern an sich bekannt) zu gestalten. Dadurch wird im Falle einer Relativbewegung zwischen Hohlwelle und Spindel für den zylindrischen Rollen-Wälzkörper ein Gleiten in achsparalleler Richtung entsprechend der translatorischen Stellbewegung realisiert.

Weitere Einzelheiten, Merkmale, Vorteile und Wirkungen auf der Basis der Erfindung ergeben sich aus der nachfolgenden Beschreibung bevorzugter Ausführungsformen der Erfindung sowie aus den Zeichnungen. Diese zeigen in:
- Figur 1: einen erfindungsgemäßen Kugelroll-Spindelantrieb mit Servomotor in axial teilweise geschnittener Längsansicht,
- Figur 2: eine vergrößerte Darstellung des in Figur 1 umrandeten Bereichs II.

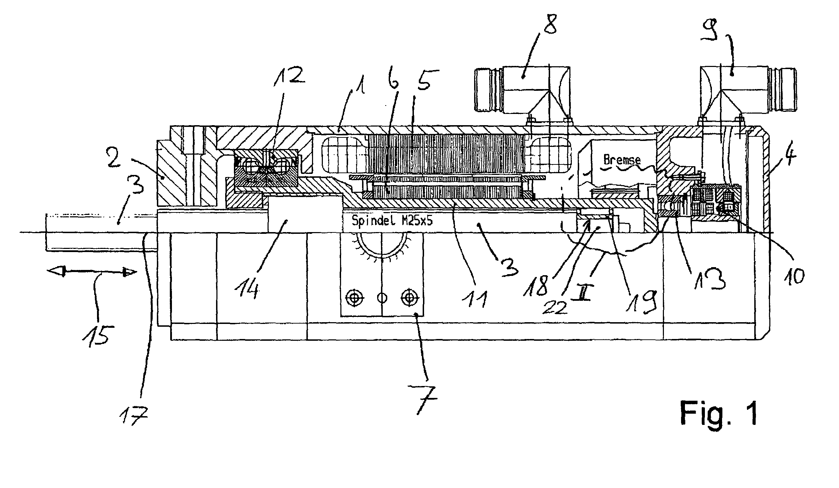

Gemäß Figur 1 ist bei dem für die Erfindung beispielhaften Kugelroll-Spindeltrieb in einem Gehäuse 1 mit stirnseitigem A-Lagerdeckel 2 an der Austrittsseite einer Spindel 3 und mit einem B-Lagerdeckel 4 an der entgegengesetzten Stirnseite ein an sich bekannter Servomotor mit Stator 5 und davon umgebenen Rotor 6 über eine Motorbefestigung 7 aufgehangen. Der elektrischen Speisung des Servomotors 5, 6 dient eine an der Seitenwandung abstehende Anschlußdose 8 für Leistungsstecker. In ähnlicher Weise ist im Bereich des B-Lagerdeckels 4 eine Anschlußdose 9 für einen Drehgeber bzw. Resolver 10 innerhalb des Gehäuses 1 montiert.

Gemäß Figur 1 ist von dem Rotor 6 bzw. dessen Blechpaket eine Hohlwelle 11 derart starr und fest umfaßt, dass sich letztere bei Rotation des Rotors mitdreht. Der Drehlagerung der Hohlwelle 11 dient ein erstes, A-seitiges Lager 12 und ein zweites, B-seitiges Lager 13. Beide sind gemäß gezeichnetem Beispiel mit Kugellagern realisiert, die über den jeweiligen Außenring am Gehäuse 1 und den jeweiligen Innenring an der Hohlwelle 11 abgestützt sind. Mit der Hohlwelle 11 wiederum drehfest gekoppelt ist eine Kugelroll-Spindelmutter 14, die in an sich bekannter Weise mit der komplementären Außenumfangswandung der Spindel 3 derart in Eingriff steht, dass bei Drehung der Spindelmutter 14 durch den Rotor 6 über die damit fest gekoppelte Hohlwelle 11 der Spindel 3 innerhalb der Hohlwelle 11 lineare, translatorische Hin- und Herbewegungen 15 erteilt werden. Wie an sich bekannt, ist dazu noch eine Verdrehsicherung notwendig (vgl. z. B. EP 1 089 019 A1, Spalte 4, Zeile 11-14 - Verbinden der Spindel mit einer Roboterschweißzange; WO 90/14920, Seite 4, Zeile 20-25), die beispielsweise durch Anhängen der Spindel über eine Ringschraube an einer Schweißzange erfolgen kann (nicht gezeichnet).

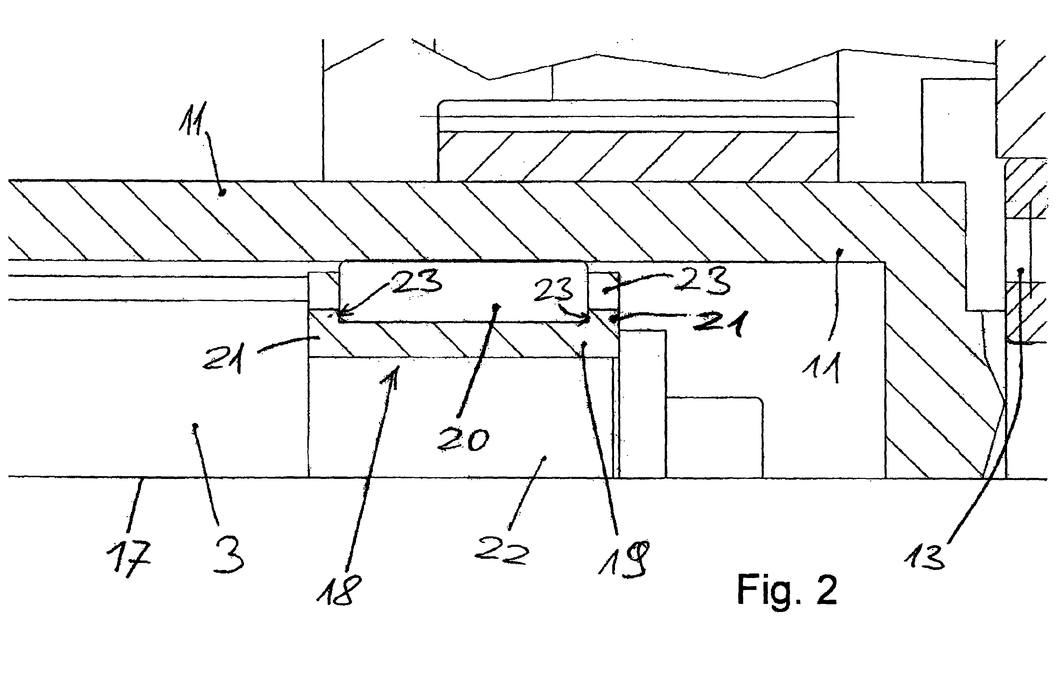

Gemäß Figur 2 dient zur radialen Festlegung der Spindel 3 innerhalb der durch die Hohlwelle 11 gebildeten Hohlkammer sowie zur Aufnahme von senkrecht zur Spindel-Längsachse 17 gerichteten Querkräften ein radiales Stützlager 18. Es ist mittels eines zerlegbaren Zylinderrollenlagers gebildet, dessen Innenring 19 eine Mehrzahl von Zylinderrollen 20 zwischen zwei Borden (Anschlag- und Führungsschultern) 21 an je einer Zylinderrollen-Stirnseite führt. Infolgedessen sind die Zylinderrollen 20, welche die Längsachse 17 kranzartig umgeben, in achsparalleler Richtung parallel zur Längsachse 17 auf einem verjüngten, vom Innenring 19 direkt umfaßten Endfortsatz 22 der Spindel 3 festgelegt. Der gegenüber deren sonstigen Außenumfang verjüngt bemessene Endfortsatz 22 ist an dem Ende der Spindel 3 angebracht, welches dem B-Lagerdeckel 4 zugewandt ist. Darauf kann der Stützlager-Innenring 19 beispielsweise im Paßsitz getrennt von einem etwaigen Lager-Außenring aufgeschoben werden. Beispielsweise kann ein marktgängiges Zylinderrolllager, bei dem die Zylinderrollen im Innenring zwischen festen Borden geführt sind, während der Außenring bordlos ist, verwendet werden. Der bordlose Außenring wird dann erfindungsgemäß vor dem Aufstecken auf den Endfortsatz 22 abgezogen, und dann die verbleibende Baueinheit aus zweibordigem Innenring und einem Kranz aus mehreren, um die Längsachse 17 geführten Zylinderrollen auf den Spindel-Endfortsatz 22 montiert. Zweckmäßig ist der Rollkörperkranz mit Rollen 22 in an sich bekannter Weise durch einen Lagerkäfig 23 zusammengehalten und zu der Baueinheit verbunden. Erfindungsgemäß ist der (nicht gezeichnete) abgezogene Außenring des verwendeten Rollenlagers durch die Hohlwelle 11 ersetzt, welche funktionell für die Zylinderrollen 20 einen bordlosen Außenring bildet, worauf sich die Zylinderrollen 20 axial bzw. parallel zur Längsachse 17 aufgrund der Krafteinwirkung des jeweiligen Bords 21 verschieben können. Damit ist einerseits eine ausreichende radiale Abstützung der Spindel 3 gegeben, wobei sich die Hohlwelle 11 aufgrund des nur minimalen Rollwiderstands der Zylinderrollen 20 verschleißarm gegenüber der verdrehfesten Spindel 3 drehen kann.

### Bezugszeichenliste

- 1: Gehäuse
- 2: A-Lagerdeckel
- 3: Spindel
- 4: B-Lagerdeckel
- 5: Stator
- 6: Rotor
- 7: Motorbefestigung
- 8: Anschlußdose
- 9: Anschlußdose
- 10: Drehgeber/Resolver
- 11: Hohlwelle
- 12: A-seitiges Lager
- 13: B-seitiges Lager
- 14: Spindelmutter
- 15: Hin- und Herbewegungen
- 16: Endfortsatz
- 17: Längsachse
- 18: radiales Stützlager
- 19: Innenring
- 20: Zylinderrolle
- 21: Bord (Schulter)
- 22: Endfortsatz
- 23: Lagerkäfig

## Patentansprüche

1. Anordnung zum Umsetzen rotatorischer Motorbewegungen in lineare und/oder translatorische Stellbewegungen (15), mit einem Spindeltrieb (3,14), bei dem eine durch die Motorbewegung drehbare Spindelmutter (14) über Getriebemittel mit einer Spindel (3) in Eingriff steht, die zur Ausführung der Stellbewegungen (15) in einer Hohlwelle (11) oder einem sonstigen Hohlkörper gegen Rotation blockiert und axial unter radialer Abstützung an der Buchsen-Innenwandung durch ein Stützlager (18) geführt ist, das einen oder mehrere Wälzkörper (20) aufweist, **dadurch gekennzeichnet, dass** der oder die Wälzkörper (20) zum Abrollen direkt wenigstens auf der Innenwandung der Hohlwelle (11) und/oder einer Außenumfangswandung der Spindel (3) angeordnet und geführt sind.

2. Anordnung nach Anspruch 1, **dadurch gekennzeichnet, dass** bei der Spindel (3) ein separater und/oder getriebemittelloser Abschnitt für das Abrollen der Wälzkörper (20) ausgebildet ist.

3. Anordnung nach Anspruch 1oder 2, **dadurch gekennzeichnet, dass** die Spindel (3) einen abgegrenzten Endfortsatz (22) aufweist, worauf der Wälzkörper (20) abrollt.

4. Anordnung nach Anspruch 2 oder 3, **dadurch gekennzeichnet, dass** der Abschnitt oder Endfortsatz (22) oder die gegenüberliegende Buchsen-Innenwandung mit einer Laufrille oder sonstigen Laufbahn zum Abrollen und/oder Führen des oder der Wälzkörper (20) ausgebildet sind.

5. Anordnung nach Anspruch 2 oder 3, **dadurch gekennzeichnet, dass** auf dem Abschnitt oder Endfortsatz (22) der Innenring (19) eines Wälzlagers oder in den Hohlraum der Hohlwelle (11) der Außenring eines Wälzlagers zur Führung des Wälzkörpers (20) aufgebracht ist, der dabei jeweils mit der Buchsen-Innenwandung beziehungsweise der Spindel-Außenumfangswandung in Kontakt steht.

6. Anordnung nach einem der vorangehenden Ansprüche, **dadurch gekennzeichnet, dass** für den oder die Wälzkörper (20) die Hohlwelle (11) in der Funktion eines Wälzlager-Außenrings und/oder die Spindel in der Funktion eines Wälzlager-Innenrings verwendet oder eingesetzt sind.

7. Anordnung nach einem der vorangehenden Ansprüche, **dadurch gekennzeichnet, dass** der oder die Wälzkörper (20) nach Art eines Wälzlagers in einem Käfig (23) geführt sind, der zwischen der Spindel (3) und der diese umgebenden Hohlwelle (11) angeordnet ist.

8. Anordnung nach einem der vorangehenden Ansprüche, **dadurch gekennzeichnet, dass** der oder die Wälzkörper (20) als zylindrische Rollen, gegebenenfalls mit Nadelgestalt, ausgebildet sind.

9. Anordnung nach Anspruch 8 und einem der vorangehenden Ansprüche 2 bis 4, **dadurch gekennzeichnet, dass** ein Abschnitt (22) der Spindel-Außenumfangswandung und/oder Hohlwellen-Innenwandung für die eine oder mehreren Rollen (20) mit einer in die Wandung vertieften Laufbahn mit beidseitigen Borden (21) gestaltet sind, die jeweils eine stirnseitige Anschlagschulter für die eine oder mehreren, in der oder den Laufbahnen aufgenommenen Rollen (20) bilden.

10. Anordnung nach Anspruch 9, **dadurch gekennzeichnet, dass** der Außenumfang der Rolle (20) und die Innenwandung der Hohlwelle (11) oder die Außenumfangswandung der Spindel zum Gleiten gegeneinander in axialer Richtung (17) ausgebildet sind.

11. Anordnung nach einem der Ansprüche 1 bis 7, **dadurch gekennzeichnet, dass** der oder die Wälzkörper als Kugeln zum Rollen in Umfangsrichtung um eine Spindellängsachse (17) und in achsparalleler Richtung ausgebildet sind.

12. Anordnung nach einem der vorangehenden Ansprüche, **dadurch gekennzeichnet, dass** die Hohlwelle (11) mit einem elektrischen Rotationsmotor (5,6) baulich integriert ausgebildet ist.

## Claims

1. An assembly for converting rotary motor movement into linear and/or translational displacements (15), having a spindle drive (3,14) in which a spindle nut (14), which can be caused to rotate by motor movement, is in engagement via gear means with a spindle (3) which in order to carry out the displacements (15) in a hollow shaft (11) or other hollow body is locked against rotation and is guided axially while being supported radially on the bush inner wall by a steady bearing (18) which has one or more rolling bodies (20), **characterised in that** for rolling purposes the rolling body or bodies (20) are arranged and guided directly at least on the inner wall of the hollow shaft (11) and/or an outer circumferential wall of the spindle (3).

2. An assembly according to Claim 1, **characterised in that** in the spindle (3) a separate section and/or a section clear of the gear means is formed for the rolling of the rolling bodies (20).

3. An assembly according to Claim 1 or 2, **characterised in that** the spindle (3) has a limited end extension (22), on which the rolling body (20) rolls.

4. An assembly according to Claim 2 or 3, **characterised in that** the section or end extension (22) or the opposing bush inner wall is formed with a track groove or other track for the rolling and/or guidance of the rolling body or bodies (20).

5. An assembly according to Claim 2 or 3, **characterised in that** the inner ring (19) of a rolling bearing is mounted on the section or the end extension (22) or the outer ring of a rolling bearing is mounted in the cavity of the hollow shaft (11) so as to guide the rolling body (20) which ring is respectively in contact with the bush inner wall or the spindle outer circumferential wall.

6. An assembly according to any one of the preceding Claims, **characterised in that** for the rolling body or bodies (20) the hollow shaft (11) is used as a rolling bearing outer ring and/or the spindle is used as a rolling bearing inner ring.

7. An assembly according to any one of the preceding Claims, **characterised in that** the rolling body or bodies (20) are guided in the manner of a rolling bearing in a cage (23) which is disposed between the spindle (3) and the hollow shaft (11) surrounding it.

8. An assembly according to any one of the preceding Claims, **characterised in that** the rolling body or bodies (20) are in the form of cylindrical rollers, optionally in the form of needles.

9. An assembly according to Claim 8 and any one of Claims 2 to 4, **characterised in that** one section (22) of the spindle outer circumferential wall and/or hollow shaft inner wall for one or more rollers (20) is in the form of a track recessed into the wall with flanges (21) on either side which respectively form an end abutment shoulder for the rollers (20) accommodated in the track or tracks.

10. An assembly according to Claim 9, **characterised in that** the outer circumference of the roller (20) and the inner wall of the hollow shaft (11) or the outer circumferential wall of the spindle are designed to slide relative to one another in an axial direction (17).

11. An assembly according to any one of Claims 1 to 7, **characterised in that** the rolling body or bodies are in the form of balls for rolling in a circumferential direction about a spindle longitudinal axis (17) and in an axially parallel direction.

12. An assembly according to any one of the preceding Claims, **characterised in that** the hollow shaft (11) is formed structurally integrated with an electric rotating motor (5,6).

## Revendications

1. Dispositif pour convertir des mouvements rotatifs de moteur en mouvements de déplacement de réglage (15) linéaires et/ou en translation, comprenant un actionneur à vis (3, 14) dans lequel un écrou de vis (14) pouvant tourner sous l'effet du mouvement de moteur, est en prise, par des moyens de transmission, avec une vis (3) qui, pour l'exécution des mouvements de déplacement de réglage (15), est bloquée en rotation dans un arbre creux (11) ou un autre corps creux quelconque, et est guidée axialement en s'appuyant radialement sur la paroi intérieure de manchon par un palier d'appui (18) comportant un ou plusieurs corps roulants (20),
**caractérisé en ce que** le ou les corps roulants (20), pour leur roulement, sont disposés et guidés directement au moins sur la paroi intérieure de l'arbre creux (11) et/ou une paroi périphérique extérieure de la vis (3).

2. Dispositif selon la revendication 1, **caractérisé en ce que** sur la vis (3) est réalisé un tronçon séparé et/ou exempt de moyens de transmission, pour le roulement des corps roulants (20).

3. Dispositif selon la revendication 1 ou 2, **caractérisé en ce que** la vis (3) présente un prolongement d'extrémité (22) délimité, sur lequel roule le corps roulant (20).

4. Dispositif selon la revendication 2 ou 3, **caractérisé en ce que** le tronçon ou prolongement d'extrémité (22) ou bien la paroi intérieure de manchon opposée, sont conçus avec une rainure de roulement ou autre chemin de roulement pour le roulement et/ou le guidage du ou des corps roulants (20).

5. Dispositif selon la revendication 2 ou 3, **caractérisé en ce que** sur le tronçon ou le prolongement d'extrémité (22) est rapportée la bague intérieure (19) d'un palier à roulement, ou bien dans l'espace creux de l'arbre creux (11) est placée la bague intérieure d'un palier à roulement pour le guidage du corps roulant (20) qui alors est respectivement en contact avec la paroi intérieure de manchon ou respectivement la paroi périphérique extérieure de la vis.

6. Dispositif selon l'une des revendications précédentes, **caractérisé en ce que** pour le ou les corps roulants (20), l'arbre creux (11) est utilisé ou mis en oeuvre dans la fonction d'une bague extérieure de palier à roulement et/ou la vis dans la fonction d'une bague intérieure de palier à roulement.

7. Dispositif selon l'une des revendications précédentes, **caractérisé en ce que** le ou les corps roulants (20) sont guidés, à la manière d'un palier à roulement, dans une cage (23) qui est disposée entre la vis (3) et l'arbre creux (11) qui l'entoure.

8. Dispositif selon l'une des revendications précédentes, **caractérisé en ce que** le ou les corps roulants (20) sont réalisés sous la forme de rouleaux cylindriques, le cas échéant avec une configuration d'aiguille.

9. Dispositif selon la revendication 8 et l'une des revendications précédentes 2 à 4, **caractérisé en ce qu'**un tronçon (22) de la paroi périphérique extérieure de la vis et/ou de la paroi intérieure de l'arbre creux sont conçus avec un chemin de roulement pour ledit ou plusieurs rouleaux (20), creusé dans la paroi et comportant des bords (21) des deux côtés, qui forment chacun un épaulement de butée frontal pour ledit un ou plusieurs rouleaux (20) reçus dans le ou les chemins de roulement.

10. Dispositif selon la revendication 9, **caractérisé en ce que** la périphérie extérieure du rouleau (20) et la paroi intérieure de l'arbre creux (11) ou la paroi périphérique extérieure de la vis sont conçues pour le glissement réciproque l'une sur l'autre dans la direction axiale (17).

11. Dispositif selon l'une des revendications 1 à 7, **caractérisé en ce que** le ou les corps roulants sont réalisés sous forme de billes pour un roulement dans la direction périphérique autour d'un axe longitudinal de vis (17) et dans la direction parallèle à l'axe.

12. Dispositif selon l'une des revendications précédentes, **caractérisé en ce que** l'arbre creux (11) est réalisé de manière à être intégré de construction à un moteur rotatif électrique (5, 6).
